(19) Europäisches Patentamt
European Patent Office
Office européen des brevets

(11) **EP 2 601 503 B1**

(12) **EUROPÄISCHE PATENTSCHRIFT**

(45) Veröffentlichungstag und Bekanntmachung des Hinweises auf die Patenterteilung:
**10.09.2014 Patentblatt 2014/37**

(21) Anmeldenummer: **11739029.4**

(22) Anmeldetag: **18.07.2011**

(51) Int Cl.:
**G06K 9/00** (2006.01) **G06T 7/00** (2006.01)
**G01M 17/04** (2006.01) **G06T 7/20** (2006.01)

(86) Internationale Anmeldenummer:
**PCT/EP2011/062247**

(87) Internationale Veröffentlichungsnummer:
**WO 2012/016813 (09.02.2012 Gazette 2012/06)**

(54) **VERFAHREN UND VORRICHTUNG ZUM BESTIMMEN VON RAD- UND KAROSSERIEBEWEGUNGEN EINES FAHRZEUGES**

METHOD AND DEVICE FOR DETERMINING WHEEL MOVEMENTS AND BODY MOVEMENTS OF A VEHICLE

PROCÉDÉ ET DISPOSITIF POUR DÉTERMINER LES MOUVEMENTS DE ROUE ET DE CARROSSERIE D'UN VÉHICULE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **04.08.2010 DE 102010038905**

(43) Veröffentlichungstag der Anmeldung:
**12.06.2013 Patentblatt 2013/24**

(73) Patentinhaber: **Robert Bosch GmbH**
**70442 Stuttgart (DE)**

(72) Erfinder:
• **ABRAHAM, Steffen**
**31134 Hildesheim (DE)**
• **ZIEMLICH, Winfrid**
**70565 Stuttgart (DE)**
• **KLAR, Michael**
**74177 Bad Friedrichshall (DE)**
• **WENDT, Axel**
**70599 Stuttgart (DE)**

(56) Entgegenhaltungen:
**EP-A1- 1 224 449 DE-A1-102008 042 223**

• **HORN B K P ET AL: "DETERMINING OPTICAL FLOW", ARTIFICIAL INTELLIGENCE, ELSEVIER SCIENCE PUBLISHER B.V., AMSTERDAM, NL, Bd. 17, 1. August 1981 (1981-08-01), Seiten 185-203, XP000195787, ISSN: 0004-3702, DOI: 10.1016/0004-3702(81)90024-2 in der Anmeldung erwähnt**

EP 2 601 503 B1

**Beschreibung**

Die Erfindung betrifft ein Verfahren und eine Vorrichtung zum Bestimmen von Rad- und Karosseriebewegungen eines Fahrzeuges, insbesondere ein Verfahren und eine Vorrichtung zur Stoßdämpferprüfung mit Hilfe von Videobildsequenzen eines vorbeifahrenden Fahrzeugs.

Stand der Technik

EP 0 611 960 B1 und DE 43 05 048 A1 beschreiben Verfahren zum Prüfen eines Schwingungsdämpfers eines Kraftfahrzeugs. Bei den Verfahren wird ein auf einer Radaufstandsfläche aufstehendes Kraftfahrzeugrad durch Fußpunkterregungsschwingungen in Schwingungen versetzt. Das Dämpfungsverhalten des sich in der Radaufhängung des Kraftfahrzeugs befindlichen Schwingungsdämpfers kann bestimmt werden, indem die Differenzen aus den Bewegungsamplituden und den Bewegungsgeschwindigkeiten des Rads und denen des Fahrzeugaufbaus mit der Beschleunigung des Rads oder der dynamischen Aufstandskraft in Beziehung gesetzt werden und der Dämpfungskoeffizient aus dieser Beziehung geschätzt wird. Zur Qualitätsprüfung des Schwingungsdämpfers wird der geschätzte Dämpfungskoeffizient mit einem Referenzwert verglichen und festgestellt, ob eine Abweichung vom Referenzwert innerhalb des Toleranzbereichs liegt.

EP 1 224 449 B1 und DE 10 2008 002 484 A1 beschreiben die optische Messung von Radzentren und Karosseriebewegungen sowie deren Auswertungen zur Bestimmung des Dämpfungsmaßes zur Charakterisierung des Stoßdämpfers mit Hilfe z.B. des Einmassen-Schwinger-Modells (EMS) aus den Daten eines vorbeifahrenden und in Schwingung versetzten Fahrzeugs.

Offenbarung der Erfindung

Es ist eine Aufgabe der Erfindung, ein verbessertes Verfahren zur Messung von Rad- und Aufbaubewegungen eines Fahrzeugs und eine Vorrichtung zur Durchführung eines solchen Verfahrens bereit zu stellen.

Die Aufgabe wird durch ein Verfahren nach dem unabhängigen Patentanspruch 1 und eine Messvorrichtung nach dem unabhängigen Patentanspruch 7 gelöst.

Ein erfindungsgemäßes Verfahren zum Bestimmen von Rad- und Karosseriebewegungen eines Fahrzeuges umfasst die Schritte: Anregen einer Bewegung des Fahrzeugs; Aufnehmen einer mehrere Bilder umfassenden Bildsequenz des sich bewegenden Fahrzeugs; Bestimmen des optischen Flusses aus den Bildern der aufgenommenen Bildsequenz; und Bestimmen der Position wenigstens eines Radzentrums, der Bewegung der Karosserie und/oder eines Dämpfungsmaßes des Fahrzeugs aus dem optischen Fluss.

Die Erfindung umfasst auch eine Messvorrichtung zum Bestimmen von Rad- und Karosseriebewegungen eines Fahrzeugs mit wenigstens einer Kamera, die zur Aufnahme einer Bildsequenz des Fahrzeugs ausgebildet ist; mit einer Berechnungsvorrichtung, die zur Berechnung des optischen Flusses aus der aufgenommenen Bildsequenz ausgebildet ist; und mit einer Auswertvorrichtung, die zur Bestimmung der Position wenigstens eines Radzentrums, der Bewegung der Karosserie und/oder des Dämpfungsmaßes aus dem optischen Fluss ausgebildet ist.

Die erfindungsgemäße Auswertung des optischen Flusses ermöglicht eine Auswertung allein aus der Bewegung von Bildmerkmalen und erlaubt es, auf jegliche Modellierung des Bildinhalts, wie z.B. eines kreisförmigen Felgenrandes oder der rotationssymmetrischen Gestaltung des Rades zu verzichten. Sie ist robust und für eine Vielzahl unterschiedlicher Fahrzeugtypen einsetzbar. Sie ist damit besonders für den praktischen Einsatz in Werkstätten geeignet, wo eine große Variabilität der zu prüfenden Fahrzeuge zu erwarten ist.

In einer Ausführungsform werden die Position wenigstens eines Radzentrums, die Bewegung der Karosserie und das Dämpfungsmaß simultan bestimmt. Durch die simultane Bestimmung der Rad- und Karosseriebewegung sowie des Dämpfungsmaßes ist das Verfahren eine aus Sicht der "Methode der kleinsten Quadrate" bestmögliche Dämpfungsbestimmung aus den Daten der Videokamera, da keine Zwischengrößen abgeleitet werden, sondern die Beobachtungen (hier: optischer Fluss) mit den Unbekannten (hier: Schwingungsmodell, z.B. Einmassenschwingsystem EMS) in funktionaler Beziehung stehen. Aufgrund der Regularisierung ist das Verfahren robust gegenüber Messfehlern in der Bildsequenz und systematische Fehler bei der Bestimmung des Dämpfungsmaßes im Verfahren werden weitgehend vermieden.

In einer Ausführungsform umfasst das Verfahren den Schritt des Eliminierens geometrischer Verzerrungen in den aufgenommenen Bildern (geometrische Entzerrung). Vorteil der geometrischen Entzerrung ist eine starke Vereinfachung der mathematischen Modellierung für das Verfahren zur Auswertung des optischen Flusses. Die geometrische Entzerrung ist vergleichbar mit einer z.B. in der Photogrammetrie bekannten Fassadenentzerrung, siehe z.B. "Thomas Luhmann, Nahbereichsphotogrammetrie, Grundlagen - Methoden -Anwendungen, 2. Auflage, 586 Seiten, 2003".

In einer Ausführungsform des Verfahrens wird das Flussfeld aus der Bestimmung des optischen Flusses segmentiert. Eine solche Segmentierung vereinfacht die folgende Auswertung des Flussfeldes.

In einer Ausführungsform des Verfahrens umfasst das Segmentieren, das Flussfeld in Flussvektoren auf dem Rad, Flussvektoren auf der Karosserie und Flussvektoren, die weder auf dem Rad noch auf der Karosserie angeordnet sind, zu segmentieren. Eine derartige Segmentierung des Flussfeldes hat sich als besonders vorteilhaft für die folgende Auswertung erwiesen.

In einer Ausführungsform des Verfahrens umfasst das Auswerten des Flussfeldes die Verwendung eines Gauß-Markoff-Modells nach der Methode der kleinsten Quadrate (siehe z.B. "W. Niemeier: Ausgleichungsrechnung, de Gruyter, Berlin - New York 2002, ISBN 3-11-014080-2"). Das Gauß-Markoff-Modell ermöglicht eine effektive und genaue Auswertung des Flussfeldes.

In einer Ausführungsform weist die Vorrichtung wenigstens eine Mono-Kamera, eine Stereo-Kamera oder ein Mehrkamerasystem auf. Eine Vorrichtung mit einer Mono-Kamera ist besonders kostengünstig; eine Vorrichtung mit einer Stereo-Kamera oder Mehrkamerasystemen ermöglicht eine besonders genaue Bestimmung der Parameter.

In einer Ausführungsform weist die Messvorrichtung wenigstens ein Mittel auf, das geeignet ist, eine Bewegung des Fahrzeugs anzuregen. Durch ein solches Anregungsmittel kann die zur Durchführung des erfindungsgemäßen Verfahrens notwendige Bewegung des Fahrzeugs besonders einfach und reproduzierbar angeregt werden.

In einer Ausführungsform ist die Messvorrichtung derart ausgebildet, dass die Bildaufnahme durch mehrere Kameras synchron erfolgt und ein erweitertes Fahrzeugmodell für die Auswertung der aufgenommenen Bildsequenzen verwendet wird. Dadurch kann die Genauigkeit der Parameterbestimmung noch weiter erhöht werden.

Die Erfindung wird im Folgenden anhand der Figuren näher erläutert:

Figur 1 zeigt eine schematische Darstellung eines erfindungsgemäßen Messsystems mit einem Fahrzeug;

Figur 2 zeigt eine Prinzipskizze eines Schwingungsmodells;

Figur 3 zeigt schematisch die Verarbeitung der von einer der Messkameras aufgenommenen Videobilddaten in einem erfindungsgemäßen Verfahren;

Figuren 4a, 4b, 4c zeigen die Segmentierung der Flussvektoren; und

Figur 5 zeigt ein Auswertemodell zur simultanen Bestimmung der Radzentren und der Karosseriebewegungen.

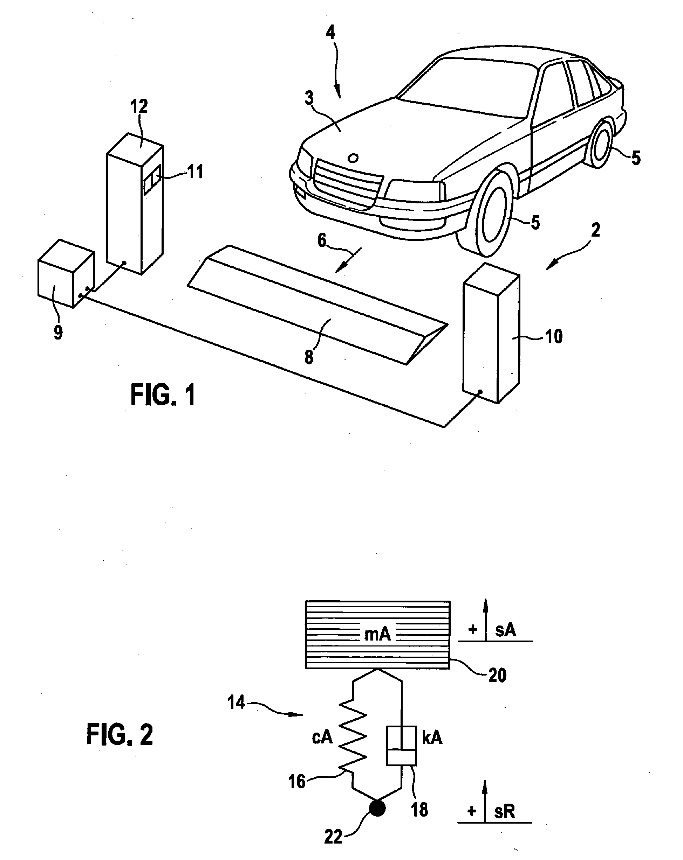

Figur 1 zeigt eine schematische Darstellung eines erfindungsgemäßen Messsystems 2 mit einem Fahrzeug 4, dessen Schwingungsdämpfer erfindungsgemäß überprüft werden sollen.

Das Messsystem 2 umfasst eine längliche Schwelle mit definierter Höhe, deren Haupterstreckungsrichtung im Wesentlichen quer bzw. im Wesentlichen in einem rechten Winkel zu der Bewegungsrichtung 6 des Fahrzeugs 4 angeordnet ist. Die Länge der Schwelle 8 entspricht wenigstens der Breite des Fahrzeugs 4, so dass beim Überfahren der Schwelle 8 jeweils zwei Räder 5 der gleichen Achse des Fahrzeugs 4 durch die Schwelle 8 eine definierte vertikale Anregung erfahren und in eine vertikale Schwingung versetzt werden.

Auf beiden Seiten der Schwelle 8, entweder auf Höhe der Schwelle 8 oder in Fahrtrichtung des Fahrzeugs 4 kurz hinter der Schwelle 8, ist jeweils ein linker Messkopf 10 und ein rechter Messkopf 12 angeordnet. Jeder der Messköpfe weist jeweils wenigstens eine nach innen in Richtung auf das Fahrzeug 4 gerichtete Messkamera 11, die z.B. CCD-Sensoren umfasst, auf. Die Messkameras 11 sind in geeigneter Höhe über dem Boden angebracht und in der Lage, das Rad 5 und die Karosserie 3 des Fahrzeugs 4 optisch zu erfassen. In einem erfindungsgemäßen Verfahren wird mit jeder der Messkameras 11 eine Anzahl von Bildern, die eine Bildsequenz bilden, aufgenommen, während das Fahrzeug 4 über die Schwelle 8 fährt.

Das Messsystem 2 verfügt des Weiteren über eine Datenverarbeitungseinheit 9, welche die von den Messkameras 11 der Messköpfe 10 und 12 aufgenommenen Bildsequenzen erhält und die eingerichtet ist, um ein erfindungsgemäßes Auswertverfahren durchzuführen.

Das Messsystem 2 kann zusätzlich über eine Möglichkeit zur Dateneingabe verfügen, mittels derer Daten für das zu prüfende Fahrzeug 4 entweder manuell über eine angeschlossene Tastatur oder über eine Datenkopplung zu einem anderen Computer oder durch Einlesen von einem Speichermedium eingegeben werden können.

Figur 2 zeigt eine Prinzipskizze eines Schwingungsmodells 14. Das Schwingungsmodell 14 ist ein weg-angeregtes Einmassenschwingsystem (EMS), mit dem sich die Schwingung zwischen der Karosserie 3 und dem Kraftfahrzeugrad 5 beschreiben lässt. Das Schwingungsmodell 14 stellt die Betrachtung eines Viertelfahrzeugs dar, d. h., eine Achsseite mit der anteiligen Karosseriemasse $m_A$.

Die Fahrzeugmasse bzw. Karosseriemasse $m_A$ ist mit dem Bezugszeichen 20 gekennzeichnet und schematisch als Rechteck dargestellt. Die Radachse 22 bzw. die Radaufhängung ist mit dem Bezugszeichen 22 gekennzeichnet. Der Schwingungsdämpfer wird von der Feder 16 mit der Federsteifigkeit $c_A$ und dem parallelen Dämpfungsglied 18 mit dem Dämpfungsfaktor $k_A$ gebildet, und die Karosseriemasse 20 ist durch diesen Schwingungsdämpfer auf der Radachse 22 gelagert.

Die Richtung der Bewegung des Fahrzeugrads 5 bzw. der Radbewegung sR ist mit einem nach oben gerichteten Pfeil dargestellt, und die Richtung der Bewegung der Karosseriemasse 3 bzw. der Aufbaubewegung sA ist ebenfalls mit einem nach oben gerichteten Pfeil dargestellt.

Die Karosseriemasse 20 wird aufgrund der Bewegung des Fahrzeugrads 5 und die Übertragung durch den Schwingungsdämpfer zum Schwingen angeregt.

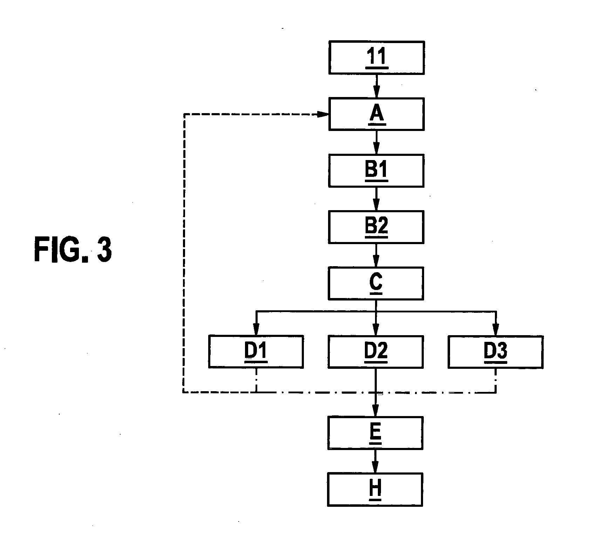

Figur 3 beschreibt schematisch die Verarbeitung der von einer der Messkameras 11 aufgenommenen Videobilddaten in einem erfindungsgemäßen Verfahren:

Ausgehend von einer Mono-Videokamera 11 wird die aufgezeichnete Bildsequenz A einer dedizierten Rechenhardware zur Bildrektifizierung B1 übergeben. Die Bildrektifizierung ist zur vereinfachten Modellierung der funktionalen Modelle notwendig. Werden die Eingangsbilddaten nicht rektifiziert, kann die optische Verzerrung, die von der Aufnahmeoptik usw. verursacht wird, auch rechnerisch an das ermittelte Flussfeld angebracht werden. Die Bildrektifizierung ist ein Standardverfahren, welches z.B. auch bei der Berechnung von Stereo-Videobildern zum Einsatz kommt.

Anschließend wird, ebenfalls auf einer dedizierten Rechenhardware B2, aus den rektifizierten Bilddaten der optische Fluss bestimmt. Die Grundlagen zur Berechnung des optischen Flusses werden z.B. von Berthold K. P. Horn und Brian G. Schunck in "Determining Optical Flow", Artificial Intelligence, vol. 17, no. 1-3, pp. 185-203, 1981 beschrieben. Die Echtzeitprozessierung des optischen Flusses z.B. basierend auf einem FPGA wird z.B. von Zhaoyi Wei, Dah-Jye Lee und Brent E. Nelson in "FPGA-based Real-time Optical Flow Algorithm Design and Implementation, Journal of Multimedia, Vol. 2, No. 5, September 2007, Seiten 38-44" beschrieben. Aus den Mono-Videobilddaten wird ein Vektorfeld zwischen jeweils zwei aufeinanderfolgenden Bildern berechnet. Dies entspricht der Bestimmung von Punktkorrespondenzen und gibt die Bewegungsrichtung und - geschwindigkeit dieser Punkte an.

Im nächsten Schritt C wird das Flussfeld in Flussvektoren D1 auf der Fahrzeugkarosserie 3, Flussvektoren D2 auf dem Rad 5 und Flussvektoren D3, die weder auf der Fahrzeugkarosserie 3 noch auf dem Rad 5 liegen, segmentiert. Die Vektoren der beiden Gruppen D1 und D2 unterscheiden sich dadurch, dass die Bewegung der Karosserie 3 nur translatorische Anteile enthält und die Bewegung des Rades 5 aufgrund der Rollbewegung eine Mischung aus einer Drehbewegung und translatorischen Anteilen enthält.

Die Segmentierung gehorcht dabei folgenden Regeln:

Alle Vektoren, die eine Dreh- und Translationsbewegung enthalten, welche mit der höchsten Häufigkeit in dem Vektorfeld auftritt, werden als Radvektoren D2 klassifiziert. Alle Vektoren, die nur eine Translationsbewegung enthalten, welche mit der höchsten Häufigkeit in dem Vektorfeld auftritt, werden als Karosserievektoren klassifiziert D1.

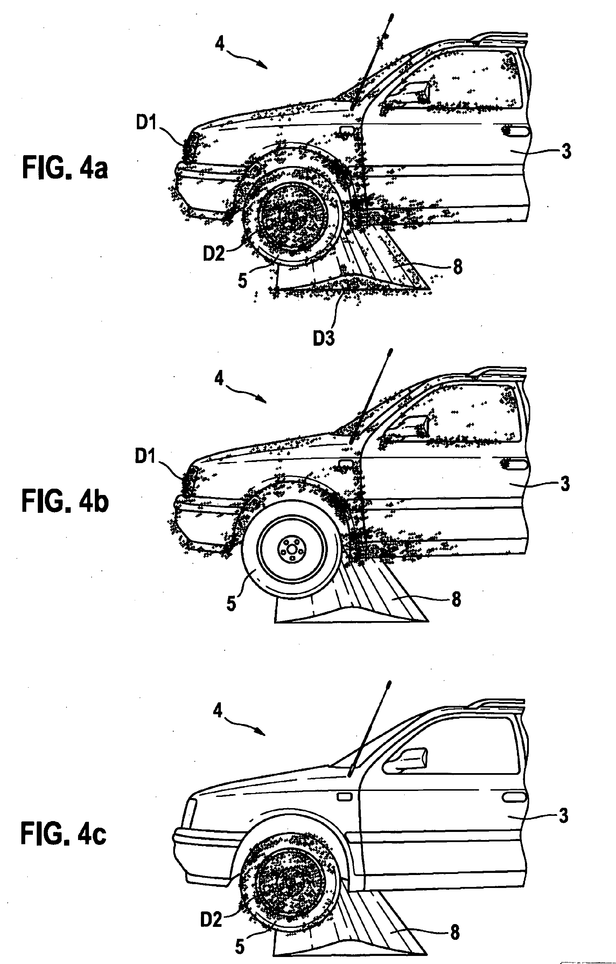

Die Figuren 4a bis 4c zeigen beispielhaft eine Seitenansicht des Fahrzeugs 4 mit aus der aufgenommenen Bildsequenz bestimmten Flussvektoren D1, D2 und D3. Die Flussvektoren D1, D2 und D3 sind dabei in der schematischen, zeichnerischen Darstellung als Kreuze dargestellt. In der Figur 4a sind alle Flussvektoren D1, D2, D3 gezeigt. In der Figur 4b sind nur die Flussvektoren D1 gezeigt, die bei der Segmentierung der Karosserie 3 zugeordnet worden sind und in der Figur 4c sind nur die Flussvektoren D2 gezeigt, die bei der Segmentierung dem Rad 5 zugeordnet worden sind.

Sind alle Bilder der aufgenommenen Sequenz von dem in Schwingung versetzten Fahrzeug 4 verarbeitet worden, werden die Parameter H, unter anderem der gesuchte Dampfungsparameter, im Auswertemodell E bestimmt. Als Eingangsdaten dienen dabei die segmentierten Flussfelder D1, D2, D3.

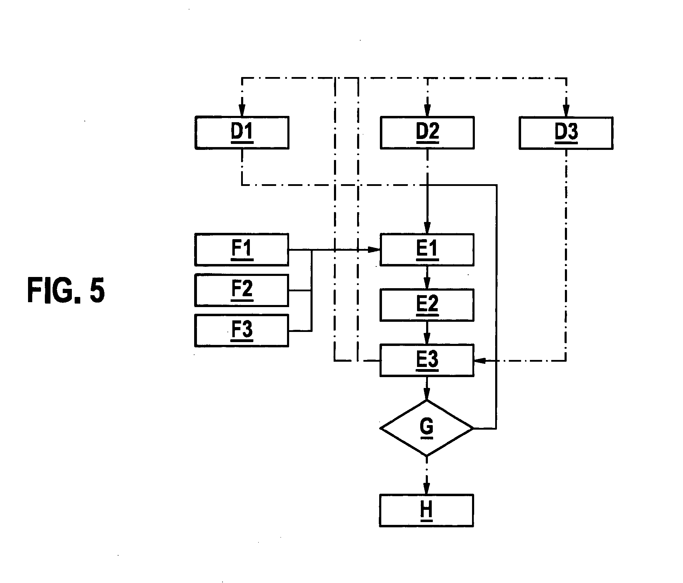

In Figur 5 ist ein Auswertemodell zur simultanen Bestimmung der Radzentren und der Karosseriebewegungen aller zu berücksichtigenden Zeitpunkte der Videosequenz sowie des Dämpfungsmaßes, welches im Folgenden näher erläutert wird, dargestellt.

Die Lösung erfolgt in einem Gauß-Markoff-Modell nach der Methode der kleinsten Quadrate. Im Schritt E1 wird ein Normalgleichungssystem aufgebaut. Für Flussvektoren D1 der Fahrzeugkarosserie 3 wird das funktionale Modell F1 und für die Flussvektoren D2 des Rades 5 das funktionale Modell F2 angewendet. Die Schwingungsgleichung F3 wird als Bedingungsgleichung zwischen den unbekannten Größen der funktionalen Modelle F1, F2 eingeführt. Sie wirkt regularisierend und führt zur Bestimmung des gesuchten Dämpfungsmaßes.

Im Schritt E2 wird das Normalgleichungssystem gelöst. Mit den im Schritt E2 bestimmten Parameter wird in E3 die Eingangssegmentierung überarbeitet: Es wird anhand der nun verbessert bestimmten Parametern geprüft, ob aus den Flussvektoren D3, die bislang weder der Karosserie noch dem Rad zugeordnet worden sind, doch Vektoren in einem dieser Bereiche liegen. Im Umkehrschluss wird auch geprüft, ob die derzeit als D1 bzw. D2 klassifizierte Vektoren richtig zugeordnet sind. Iterativ werden die überarbeiteten Segmentierungsergebnisse in E1 zur Aufstellung des Normalgleichungssystems verwendet. Dieser Prozess wird solange wiederholt, bis in G die Konvergenz des Ausgleichsprozesses festgestellt wird. Die final bestimmten Parameter H sind das gesuchte Ergebnis.

Für die Auswertung stehen die zuvor bestimmten Flussvektoren

D1: $\mathbf{u}_{Ai} = [u_{Axi} \ u_{Ayi}]$ von Karosseriepunkten ($P_{Ai}$) und

D2: $\mathbf{u}_{Ri} = [u_{Rxi} \ u_{Ryi}]$ von Radpunkten ($P_{ri}$)

zur Verfügung.

Zu bestimmen sind die Parameter:

- Dämpfungsmaß $\Theta$,
- das Drehzentrum $Z_i$ zu jedem Zeitpunkt i der Bildsequenz, und
- ein fester Bezugspunkt auf der Karosse $T_{Ai}$, dessen Bewegung über die Bildsequenz bestimmt wird. Er dient zur Bestimmung der Federbewegung des Rades.

Funktionale Modelle:

1. Messgleichung der Karosseriepunkte F1:

$$[u_{Axi}, \ u_{Ayi}] = F_1(P_{Ai-1}, T_i, T_{i-1}) \tag{1}$$

wobei $P_{ai-1}$ ein Karosseriepunkt im Bild i-1 ist, woraus sich der Fluss $u_{Axi}$, $u_{Ayi}$ ergibt, und $T_i$, $T_{i-1}$ der Bezugspunkt auf der Karosserie zum Zeitpunkt i bzw. i-1 ist.

2. Messgleichung der Karosseriepunkte F2:

$$[u_{Rxi} \ u_{Ryi}] = F_2(\Delta\alpha_i, P_{Ri-1}, D_i, D_{i-1}) \tag{2}$$

wobei

$P_{Ri-1}$ ein Radpunkt im Bilde i-1,
$D_i$, $D_{i-1}$ Drehzentren des Rades zum Zeitpunkt i bzw. i-1, und
$\Delta\alpha_i$, der differenzielle Rollwinkel des Rades sind.

3. Schwingungsgleichung, Einmassenschwinger (F3)

Bewegt sich das Fahrzeug 4 parallel zur Bildebene, so können die Aufbaubewegung $Z_{Ai}$ und die Radbewegung $Z_{Ri}$ vereinfacht als Bewegung in z-Richtung des Bezugspunkt auf der Karosserie $T_i$ und des Drehzentrums $D_i$ in Bildkoordinaten approximiert werden. Dies impliziert die Annahme, dass sich die Federung senkrecht zur Fahrtrichtung des Fahrzeuges 4 auswirkt. Da die Dämpfungskonstante nur ein Abklingen der Schwingung beschreibt, muss keine maßstäbliche Verbindung zwischen der realen Welt [mm] und den Bildkoordinaten [Pixel] hergestellt werden. Die Bewegung wird vielmehr direkt in Pixelkoordinaten berechnet.

Die Differentialgleichung des Einmassenschwingers lautet:

$$Z''_{Ai} + 2\delta(Z'_{Ai} - Z'_{Ri}) + \omega_0^2 (Z_{Ai} - Z_{Ri}) = 0 \tag{3}$$

Für die Funktion F3 gilt damit:

$$F3(Z''_{Ai}, Z'_{Ri}, Z'_{Ai}, Z_{Ri}, Z_{Ai}, \bar{\delta}, \omega_0) = Z''_{Ai} + 2\delta(Z'_{Ai} - Z'_{Ri}) + \omega_0^2 (Z_{Ai} - Z_{Ri}) \qquad (4)$$

wobei:

$\omega_0$ die Eigenfrequenz des Aufbaus,
$\delta$ eine Abklingkonstante,
$Z''_{Ai}$ die Beschleunigung des Aufbaus in Pixel/s$^2$,
$Z'_{Ai}$ die Geschwindigkeit des Aufbaus in Pixel/s,
$Z'_{Ri}$ die Geschwindigkeit des Rades in Pixel/s,
$Z_{Ai}$ die Position des Aufbaus in Pixel, und
$Z_{Ri}$ die Position des Rades in Pixel ist.

Das zur Beurteilung des Schwingungsdämpfers verwendete Lehr'sche Dämpfungsmaß ist definiert als Quotient aus Abklingkonstante und Aufbaueigenfrequenz:

$$\Theta = \delta / \omega_0.$$

Mit den funktionalen Modellen in den Gleichung (1), (2) und (4) ist gezeigt, wie die Flussvektoren mit den gesuchten Unbekannten zur Bestimmung des Dämpfungsmaßes ($\Theta$) in direkter Beziehung stehen. Weiter wird deutlich, dass als Eingangsdaten Flussvektoren ausreichen, welche ausschließlich die Beziehung zwischen zwei Bildern beschreiben. Es sind also keine Trajektorien von Merkmalspunkten über die gesamte Videosequenz erforderlich, wodurch das Verfahren einfach realisierbar ist.

Zur Bestimmung der genannten Parameter werden gemäß der Methode der kleinsten Quadrate die Quadratsummen der Abweichungen der gleichzeitig betrachteten funktionalen Modelle F1, F2 und F3 minimiert. Die Lösung erfolgt nach Standardverfahren der Ausgleichsrechnung, wie sie beispielsweise von W. Niemeier in "Ausgleichungsrechnung, de Gruyter, Berlin - New York 2002, ISBN 3-11-014080-2" beschrieben werden.

In einer möglichen Variante werden mehrerer Kameras 4 je Fahrzeugseite verwendet. Dadurch ist geringerer Abstand zwischen den einander gegenüberliegenden Messköpfen 10, 12 realisierbar. Um das gleiche Sichtfeld zu erreichen, müssen dann auf jeder Seite des Fahrzeugs 4 mehrere Kameras bzw. Messköpfe 10, 12 seitlich entlang der Fahrtrichtung installiert werden. Der Vorteil ist, dass ein sehr schmaler Systemaufbau realisierbar ist, der nur geringfügig breiter als die Fahrzeugbreite ist. Für die Auswertung mehrere Kamerabilder pro Seite erfolgt jeweils eine Entzerrung auf eine gemeinsame Bezugsebene. Anschließend wird der optische Fluss berechnet und die bereits beschriebene Auswerteprozedur durchgeführt.

In einer Variante wird das Verfahren ohne den Schritt der Bildrektifizierung durchgeführt. Die optischen Flussvektoren werden aus den verzerrten Original-Videokamerabildern berechnet. Anschließend werden die Flussvektoren um die geometrische Verzerrung korrigiert oder die Verzerrung wird in dem funktionalen Modell bei der Berechnung des Dämpfungsmaßes ($\Theta$) berücksichtigt. Abhängig von der Dichte des Flussfeldes bzw. der Anzahl der Flussvektoren kann des zu einer Optimierung der für die Durchführung des Verfahrens notwendigen Rechenzeit führen.

Optional kann die funktionale Modellierung, um Parameter, die

a) eine Verkippung der Bildebene und der Fahrzeugbewegungsebene,
b) Tiefenänderungen zwischen einzelnen Rad- und Karosseriepunkten, und /oder
c) Abweichungen von der senkrechten Bewegung der Radfederung (Schrägfederwinkel) beschreiben, erweitert werden, um die Genauigkeit des Verfahrens zu verbessern.

**Patentansprüche**

1. Verfahren zum Bestimmen von Rad- und Karosseriebewegungen eines Fahrzeugs (4) mit einer Karosserie (3) und wenigstens einem Rad (5), wobei das Verfahren die Schritte umfasst:

- Anregen einer Bewegung des Fahrzeugs (4);
- Aufnehmen einer Bildsequenz (A) von Bildern des sich bewegenden Fahrzeugs (4);
**gekennzeichnet durch** die Schritte
- Bestimmen des optischen Flusses aus den aufgenommenen Bildern der Bildsequenz (A); und
- Bestimmen der Position wenigstens eines Radzentrums (22), der Bewegung der Karosserie (3) und/oder eines Dämpfungsmaßes ($\Theta$) des Fahrzeugs (4) aus dem optischen Fluss.

2. Verfahren nach Anspruch 1, wobei die Position wenigstens eines Radzentrums (22), die Bewegung der Karosserie (3) und das Dämpfungsmaß ($\Theta$) simultan bestimmt werden.

3. Verfahren nach Anspruch 1 oder 2, welches zusätzlich den Schritt des Eliminierens geometrischer Verzerrungen in den aufgenommenen Bildern umfasst.

4. Verfahren nach einem der vorangehenden Ansprüche, wobei das Bestimmen des optischen Flusses umfasst, das Flussfeld zu segmentieren.

5. Verfahren nach Anspruch 4, wobei das Segmentieren umfasst, das Flussfeld in Flussvektoren (D2) auf dem Rad (5), Flussvektoren (D1) auf der Karosserie (3) und Flussvektoren (D3), die weder auf dem Rad (5) noch auf der Karosserie (3) angeordnet sind, zu segmentieren.

6. Verfahren nach Anspruch 2, wobei das Bestimmen eines Dämpfungsmaßes die Verwendung eines Gauß-Markoff-Modell nach der Methode der kleinsten Quadrate umfasst.

7. Messvorrichtung zum Bestimmen von Rad- und Karosseriebewegungen eines Fahrzeugs (4), das eine Karosserie (3) und wenigstens ein Rad (5) hat, mit:

   wenigstens einer Kamera (11), die zur Aufnahme einer Bildsequenz (A) von Bildern des Fahrzeugs (4) ausgebildet ist;
   **gekennzeichnet durch**
   eine Berechnungsvorrichtung (9), die zur Berechnung des optischen Flusses aus der aufgenommenen Bildsequenz (A) ausgebildet ist; und
   eine Auswertvorrichtung (9), die zur Bestimmung der Position wenigstens eines Radzentrums (22), der Bewegung der Karosserie (3) und/oder des Dämpfungsmaßes ($\Theta$) aus dem optischen Fluss ausgebildet ist.

8. Vorrichtung nach Anspruch 7, wobei die Kamera (11) eine Mono-Kamera, eine Stereo-Kamera oder ein Mehrkamerasystem ist.

9. Vorrichtung nach Anspruch 7 oder 8, wobei die Messvorrichtung wenigstens ein Mittel (8) umfasst, das geeignet ist, eine Bewegung des Fahrzeugs (4) anzuregen.

10. Vorrichtung nach einer der Ansprüche 7 bis 9, die derart ausgebildet ist, dass die Bildaufnahme durch die mehreren Kameras (11) synchron erfolgt und ein erweitertes Fahrzeugmodell für die Auswertung der aufgenommenen Bildsequenzen (A) verwendet wird.

## Claims

1. Method for determining wheel and body movements of a vehicle (4) having a vehicle body (3) and at least one wheel (5), wherein the method comprises the steps of:

   - prompting a movement of the vehicle (4);
   - recording a sequence (A) of images of the moving vehicle (4);

   **characterized by** the steps of:

   - determining the optical flow from the recorded images of the image sequence (A); and
   - determining the position of at least one wheel centre (22), the movement of the vehicle body (3) and/or of a degree ($\Theta$) of damping of the vehicle (4) from the optical flow.

**2.** Method according to Claim 1, wherein the position of at least one wheel centre (22), the movement of the vehicle body (3) and the degree ($\Theta$) of damping are determined simultaneously.

**3.** Method according to Claim 1 or 2, which additionally comprises the step of eliminating geometric distortions in the recorded images.

**4.** Method according to one of the preceding claims, wherein determining the optical flow comprises segmenting the flow field.

**5.** Method according to Claim 4, wherein segmenting comprises segmenting the flow field into flow vectors (D2) on the wheel (5), flow vectors (D1) on the vehicle body (3) and flow vectors (D3) which are not arranged either on the wheel (5) or on the vehicle body (3).

**6.** Method according to Claim 2, wherein determining a degree of damping comprises the use of a Gauss-Markov model using the method of least squares.

**7.** Measuring apparatus for determining wheel and body movements of a vehicle (4) which has a vehicle body (3) and at least one wheel (5), comprising:

at least one camera (11) which is designed to record a sequence (A) of images of the vehicle (4);
**characterized by**
a calculation apparatus (9) which is designed to calculate the optical flow from the recorded image sequence (A); and
an evaluation apparatus (9) which is designed to determine the position of at least one wheel centre (22), the movement of the vehicle body (3) and/or the degree ($\Theta$) of damping from the optical flow.

**8.** Apparatus according to Claim 7, wherein the camera (11) is a mono camera, a stereo camera or a multi-camera system.

**9.** Apparatus according to Claim 7 or 8, wherein the measuring apparatus comprises at least one means (8) which is suitable for prompting a movement of the vehicle (4).

**10.** Apparatus according to one of Claims 7 to 9 which is designed in such a way that images are recorded by the plurality of cameras (11) in a synchronous manner, and an upgraded vehicle model is used for evaluating the recorded image sequences (A).


**Revendications**

**1.** Procédé pour déterminer les mouvements de roue et de carrosserie d'un véhicule (4) doté d'une carrosserie (3) et d'au moins une roue (5), le procédé comprenant les étapes consistant à :

- impulser un mouvement du véhicule (4) ;
- prendre une séquence d'images (A) comprenant des images du véhicule (4) se déplaçant ;

**caractérisé par** les étapes consistant à :

- déterminer le flux optique à partir des images prises de la séquence d'images (A) ; et
- déterminer la position d'au moins un centre de roue (22), le mouvement de la carrosserie (3) et/ou une mesure d'affaiblissement ($\theta$) du véhicule (4) à partir du flux optique.

**2.** Procédé selon la revendication 1, la position d'au moins un centre de roue (22), le mouvement de la carrosserie (3) et la mesure d'affaiblissement ($\theta$) étant déterminés simultanément.

**3.** Procédé selon la revendication 1 ou 2, comprenant en outre l'étape consistant à éliminer les aberrations géométriques dans les images prises.

**4.** Procédé selon l'une quelconque des revendications précédentes, la détermination du flux optique comprenant la segmentation du champ de flux.

5. Procédé selon la revendication 4, la segmentation comprenant la segmentation du champ de flux en vecteurs de flux (D2) sur la roue (5), en vecteurs de flux (D1) sur la carrosserie (3) et en vecteurs de flux (D3) disposés ni sur la roue (5) ni sur la carrosserie (3).

6. Procédé selon la revendication 2, la détermination d'une mesure d'affaiblissement comprenant l'utilisation d'un modèle de Gauss-Markoff selon la méthode des plus petits carrés.

7. Dispositif de mesure pour déterminer les mouvements de roue et de carrosserie d'un véhicule (4) doté d'une carrosserie (3) et d'au moins une roue (5) avec :

au moins une caméra (11) conçue pour prendre une séquence d'images (A) contenant des images du véhicule (4) ;

**caractérisé en ce que** :

un dispositif de calcul (9) est conçu pour calculer le flux optique à partir de la séquence d'images (A) prise ; et un dispositif d'analyse (9) est conçu pour déterminer la position d'au moins un centre de roue (22), le mouvement de la carrosserie (3) et/ou la mesure d'affaiblissement ($\theta$) à partir du flux optique.

8. Dispositif selon la revendication 7, la caméra (11) étant une caméra mono, une caméra stéréo ou un système pluricaméras.

9. Dispositif selon la revendication 7 ou 8, le dispositif de mesure comprenant au moins un moyen (8) adapté pour impulser un mouvement du véhicule (4).

10. Dispositif selon l'une quelconque des revendications 7 à 9, réalisé de telle sorte que la prise d'images se produit de façon synchrone par le biais de plusieurs caméras (11) et qu'un modèle de véhicule élargi est utilisé pour l'analyse des séquences d'images (A) prises.

**FIG. 1**

**FIG. 2**

**FIG. 3**

FIG. 4a

FIG. 4b

FIG. 4c

**FIG. 5**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0611960 B1
- DE 4305048 A1
- EP 1224449 B1
- DE 102008002484 A1

**In der Beschreibung aufgeführte Nicht-Patentliteratur**

- **THOMAS LUHMANN.** Nahbereichsphotogrammetrie, Grundlagen - Methoden -Anwendungen. 2003, 586
- **W. NIEMEIER ; DE GRUYTER.** *Ausgleichungsrechnung,* 2002
- **VON BERTHOLD K. P. HORN ; BRIAN G. SCHUNCK.** Determining Optical Flow. *Artificial Intelligence,* 1981, vol. 17 (1-3), 185-203
- **VON ZHAOYI WEI ; DAH-JYE LEE ; BRENT E. NELSON.** FPGA-based Real-time Optical Flow Algorithm Design and Implementation. *Journal of Multimedia,* September 2007, vol. 2 (5), 38-44
- **VON W. NIEMEIER ; DE GRUYTER.** Ausgleichungsrechnung. 2002